# FASCICULE DE BREVET EUROPEEN

(11) **EP 0 346 176 B1**
(45) Date de publication et mention de la délivrance du brevet: **31.03.1993**
(21) Numéro de dépôt: 89401425.7
(22) Date de dépôt: 25.05.1989
(51) Int. Cl.: F41F 3/052

(54) **Système de verrouillage d'une munition dans une alvéole**
Vorrichtung zum Verriegeln von Geschossen in einer Kammer
System for locking a projectile in a cell

(30) Priorité: 09.06.1988 FR 8807676
(43) Date de publication de la demande: 13.12.1989
(73) Titulaire: ETAT-FRANCAIS représenté par le DELEGUE GENERAL POUR L'ARMEMENT (DPAG), F-75996 Paris Armées (FR)
(72) Inventeur: Chabrout, Marcel, F-16430 Champniers (FR)

(56) Documents cités:
- DE-C- 954 914
- FR-A- 2 088 692
- US-A- 4 012 988
- US-A- 4 470 336
- US-A- 4 471 684
- US-A- 4 604 939

## Description

La présente invention concerne un système de verrouillage d'une munition dans une alvéole et, plus particulièrement le verrouillage d'un missile qui est lancé verticalement.

Dans les systèmes de lancement vertical de missiles, à partir de bâtiments de guerre, les missiles sont disposés, chacun, dans une alvéole d'un module. Généralement, le missile est à l'intérieur d'un conteneur qui constitue à la fois le tube de lancement et la protection au transport et à la manutention.

Chaque conteneur peut comprendre une plaque ou cadre inférieur, qui est percée d'un orifice pour assurer le passage des gaz d'échappement, au lancement du missile, cet orifice étant raccordé à une cheminée d'évacuation ménagée dans le module.

Par ailleurs, l'un des paramètres utilisés pour le système de guidage d'un missile est une donnée de référence par rapport au module. Il est donc essentiel que l'alignement des conteneurs dans le module soit respecté avec la plus grande précision et soit fidèle par rapport à une position moyenne. Il est souhaitable que l'écart angulaire, dans toutes les directions, ne soit pas supérieure à +/- 0.5 milli radian.

Une solution satisfaisante consiste à aligner chaque conteneur au moyen, d'une part, d'un appui rotulaire disposé sur le bord de l'orifice circulaire ménagé dans la structure basse dudit conteneur et, d'autre part, d'un emmanchement rotulaire prévu dans la structure haute.

Toutefois, si le conteneur est bien aligné dans le module, il n'en demeure pas moins vrai qu'il y a lieu de le verrouiller dans sa position alignée.

A cet effet, le brevet US 4471684 propose un dispositif de verrouillage d'un missile dans une alvéole formé de deux cales fixes et deux cales poussants solidaires d'une plaque déplacée par rapport à son support à l'aide d'une tige filetée munie d'une molette. Les cales poussantes viennent donc enserrer le corps du missile pour le maintenir en position fixe. De simples vis sont prévues pour assurer le verrouillage du système dans sa position de maintien du missile.

Néanmoins ce dispositif risque de déplacer l'axe du missile pendant la manoeuvre de verrouillage final et se révèle peu efficace pour les grands efforts à vaincre.

La présente invention a donc pour but de proposer un système de verrouillage verrouillant le corps à fixer dans le sens des efforts à vaincre sans contact direct avec ce corps.

Pour ce faire, la présente invention a pour objet un système de verrouillage d'une munition dans une alvéole d'un module de lancement verticale, du type décrit dans le brevet US 4471684, comprenant des moyens pour déplacer des verrous disposés en regard, l'un de l'autre et des moyens pour verrouiller les verrous, caractérisé par le fait que les moyens de déplacement d'au moins deux verrous amènent ceux-ci en position de verrouillage d'un cadre d'appui inférieur servant au centrage de la munition par appui sur des surfaces d'appui ménagées dans celui-ci.

Grâce à ce système de verrouillage, la munition qu'elle soit dans un conteneur ou non mais à la condition qu'elle soit pourvue d'un cadre d'appui inférieur nécessaire au centrage de la munition dans l'orifice d'évacuation des gaz dans le module, est verrouillée et garde ainsi son alignement dans l'alvéole.

En outre, les moyens de déplacement plaquant le cadre d'appui au fond de l'alvéole, le verrouillage se fait idéalement dans le sens des efforts à vaincre, d'où un maintien parfait du missile et une préservation de la fragilité du corps à fixer, le verrouillage se faisant sur un cadre solidaire du corps et non pas contre le corps lui-même.

D'autres avantages et caractéristiques ressortiront mieux à la lecture de la description d'un mode de réalisation préférée de l'invention, donnée à titre indicatif mais non limitatif, ainsi qu'à l'examen des dessins annexés sur lesquels :

La figure 1 est une vue schématique en perspective d'un module pour le lancement vertical de missile.

La figure 2 est une vue en perspective partielle d'un conteneur muni d'un missile.

La figure 3 est une vue en perspective schématique d'un système de verrouillage simple selon l'invention.

La figure 4 est une vue en plan schématique d'un système de verrouillage simple et double selon l'invention.

La figure 5 est une vue en perspective schématique du système de verrouillage double représenté sur la figure 4.

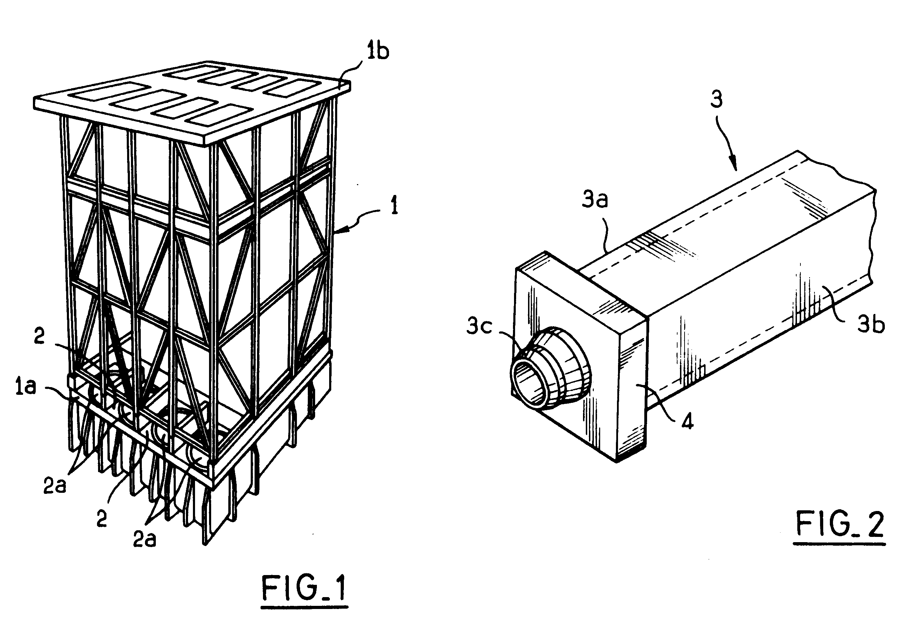

On a représenté schématiquement sur la figure 1 un module de lancement vertical pour huit munition. Le module comprend essentiellement une base 1a et une plaque supérieure 1b qui porte un certain nombre d'équipements (non représentés). Dans une ossature treillis, en profilés métalliques, qui porte la référence générale 1 et qui a été représentée de façon simplifiée, sont ménagées des alvéoles 2 dans lesquelles sont disposés des conteneurs. Chaque conteneur 3 comprend essentiellement une enveloppe tubulaire 3a, abritant une munition telle qu'un missile 3b et servant de tube de lancement, une jupe sensiblement conique 3c pour l'évacuation des gaz au moment du lancement, ladite jupe conique 3c s'insérant dans un orifice 2a de l'alvéole et étant montée sur un cadre inférieur 4 dudit conteneur.

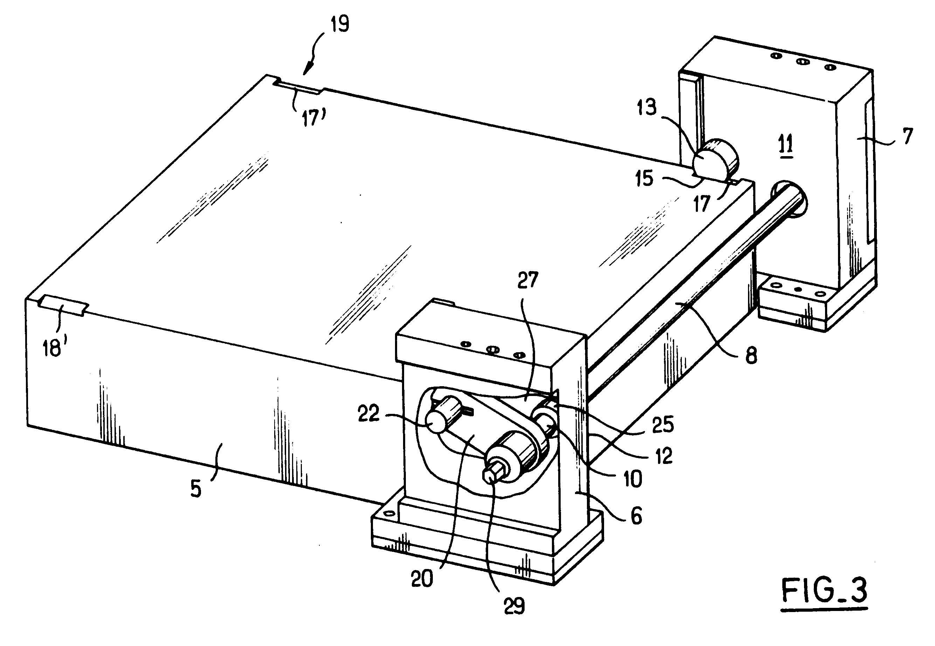

Le système de verrouillage selon l'invention, représenté sur les figures 3 à 5, est adapté pour verrouiller aussi bien les cadres inférieurs du conteneur des alvéoles d'extrémité que les cadres inférieurs de conteneurs des alvéoles intermédiaires.

Le système de verrouillage simple des cadres inférieurs d'extrémité tel que celui référencé 5, comprend deux blocs support 6 et 7 qui sont fixes et montés sur la structure de l'alvéole contenant ledit cadre inférieur 5, et une tige de commande 8 dont les extrémités 9 et 10 sont filetées avec des pas inverses.

la tige de commande 8 traverse librement les parois frontales en regard 11 et 12 des blocs support 6 et 7.

Chaque paroi frontale 11, 12 porte un verrou 13, 14 dont la face inférieure 15, 16 est biseautée suivant un angle d'environ 15° de manière à venir progressivement en appui sur des surfaces d'appui 17,17′,18 et 18′ suivant la position droite ou gauche du système de verrouillage, lesdites surfaces d'appui étant ménagées dans les coins 19 du cadre inférieur 5 qui joue le rôle de cadre d'appui pour les verrous et qui est représenté sur la figure 3. De ce fait, les surfaces d'appui 17,17′,18,18′ sont inclinées d'un angle correspondant à celui des verrous, soit environ 15°. Sur la figure 3, seul le verrou 13 du bloc support 7 est représenté avec sa face biseautée 15 en appui sur la surface d'appui 17, mais il va de soi que le verrou 14 non visible sur la figure 3 est identique audit verrou 13.

Dans chaque bloc support 6,7 est disposée une plaquette d'entraînement 20 qui relie la tige de commande 8 à un doigt 22 solidaire du verrou 13,14 (figure 3).

Une butée 25 de limitation de course pour chaque plaquette d'entraînement 20 est prévue près de la face arrière 27 de la paroi frontale 11,12 à l'intérieur du bloc support 6,7.

Le fonctionnement du système de verrouillage simple est le suivant.

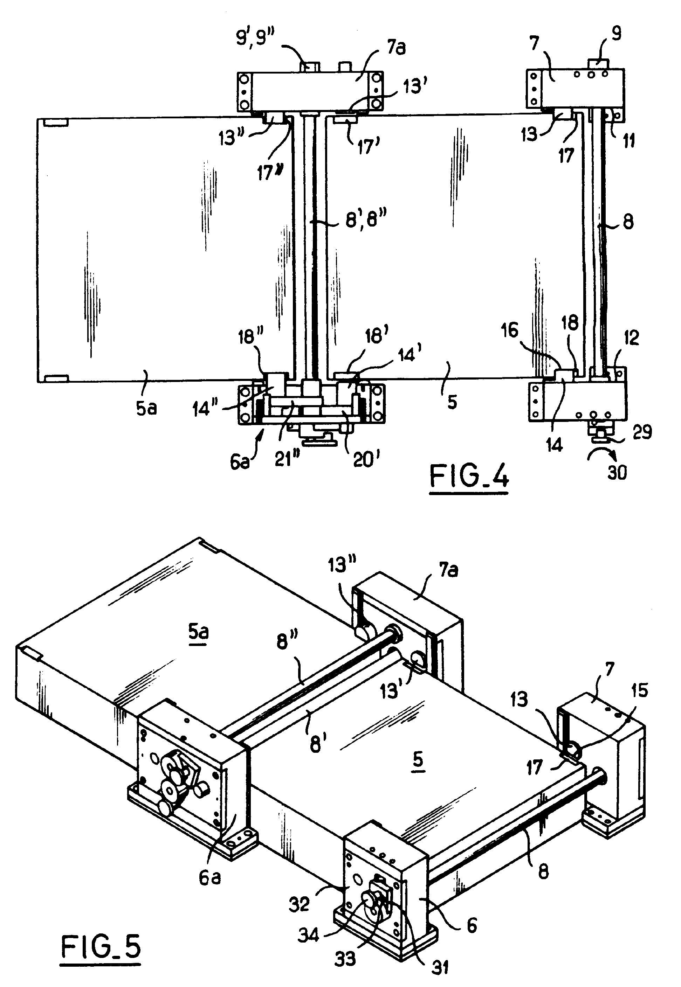

A l'aide d'une tête 29 à plusieurs pans, montée à une extrémité de la tige de commande 8, par exemple à l'extrémité 10, on tourne ladite tige de commande 8 suivant la flèche 30 représentée sur la figure 4. Le mouvement de rotation de la tige de commande 8 entraîne le déplacement des plaquettes d'entraînement 20 et, par suite, des verrous 13 et 14 vers leur surface d'appui correspondante 17,18. Le déplacement des verrous 13,14 se fait progressivement sur les surfaces d'appui 17 et 18 jusqu'à ce qu'ils occupent, en même temps, la position d'appui correcte. Lorsqu'un des verrous, par exemple 14 est en appui avant l'autre verrou 13, il s'immobilise et bloque la plaquette d'entraînement 20.

En raison du pas inverse des filetages des extrémités 9 et 10 de la tige de commande 8 et du libre passage de cette dernière à travers les parois frontales 11,12 des blocs support 6,7, la rotation de la tige de commande 8 entraîne le déplacement de la plaquette d'entraînement du bloc support 7 et du verrou correspondant 13 jusqu'à ce que ce dernier vienne correctement en appui sur la surface d'appui 17.

Lorsque les deux verrous en regard 13,14 maintiennent fermement le cadre d'appui 5, ils sont bloqués dans leur position de verrouillage au moyen d'une plaque de blocage 31 (figure 5) qui est montée sur la tige de commande 8 et à l'extérieur de la paroi arrière ou paroi de fermeture 32 du bloc support 6, de manière à verrouiller en rotation la tige de commande 8. Le positionnement correct de la plaque de blocage 31 est réalisé au moyen d'une lumière 33 en forme d'arc de cercle ou d'haricot, à travers laquelle passe un écrou de blocage 34 qui solidarise ladite plaque de blocage 31 avec la paroi arrière 32. On peut également, si on le souhaite, monter la plaque de blocage 31 également sur le doigt extérieur 22 du verrou 14.

Le système de verrouillage double représenté sur les figures 4 et 5 est destiné à verrouiller deux cadres d'appui adjacents tels que le cadre 5 et un cadre intermédiaire 5a. Les éléments constitutifs du système de verrouillage double étant les mêmes que ceux du verrouillage simple, ils seront désignés par les mêmes références mais affectées des indices prime et seconde.

Le bloc support intermédiaire 6a comprend deux verrous 14′ et 14˝ situés dans un même plan horizontal; le bloc support intermédiaire 7a comprend deux verrous 13′ et 13˝ situés dans le même plan horizontal que celui contenant les verrous 14′ et 14˝.

Deux tiges de commande 8′ et 8˝ sont disposées l'une au dessus de l'autre dans un même plan vertical, la tige de commande 8′ étant associée aux verrous 13˝ et 14˝, tandis que la tige de commande 8˝ est associée aux verrous 13′ et 14′.

Deux plaquettes d'entraînement 20′ et 21˝ sont disposées dans chacun des blocs support 6a et 7a et sont agencées de la même manière que les plaquettes d'entraînement du système de verrouillage décrites précédemment, et elles sont disposées symétriquement par rapport au plan vertical contenant les tiges de commande 8′ et 8˝ de façon que les verrous 13′,13˝, 14′,14˝ soient situés dans un même plan horizontal.

Le fonctionnement du système de verrouillage double est le même que celui du système de verrouillage simple. Comme on peut le voir sur les figures 4 et 5, les verrous 13′ et 14′ sont destinés à s'appuyer sur les surfaces d'appui 17′ et 18˝ du cadre d'appui 5 situé à droite sur ces figures, alors que les verrous 13˝ et 14˝ s'appuient sur les surfaces d'appui 17˝ et 18˝ du cadre d'appui 5′ adjacent au cadre d'appui 5, du côte des surfaces d'appui 17′ et 18′.

Il est à noter que chaque ensemble constitué par la tige de commande 8′ et les verrous associés 17˝,18˝ fonctionnent indépendamment de l'autre ensemble de tige de commande 8′ et verrous associés 17′,18′.

Dans ce qui précède, le cadre d'appui pour les verrous est constitué par le cadre inférieur du conteneur contenant un missile. Dans le cas où la munition ne comporterait pas de conteneur, elle serait alors munie d'un cadre d'appui tel que celui représenté sur la figure 3 pour permettre aux verrous des systèmes de verrouillage simples et doubles de remplir leur fonction de verrouillage.

## Revendications

1. Système de verrouillage d'une munition dans une alvéole d'un module de lancement vertical, comprenant des moyens pour déplacer des verrous disposés en regard l'un de l'autre et des moyens pour verrouiller les verrous, caractérisé en ce que les moyens (8, 8′, 8˝) de déplacement d'au moins deux verrous (13, 14) amènent ceux-ci en position de verrouillage d'un cadre d'appui inférieur (5) servant au centrage de la munition par appui sur des surfaces d'appui (17,18) ménagées dans celui-ci.

2. Système selon la revendication 1, caractérisé en ce que les moyens de déplacement des verrous sont constitués par au moins une tige de commande (8) munie d'une tête d'actionnement (29), et qui est reliée à deux verrous en regard (13,14) portés chacun par un bloc support (6,7).

3. Système selon la revendication 2, caractérisé en ce que la tige de commande est reliée à au moins un des deux verrous par une plaquette d'entraînement (20).

4. Système selon la revendication 3, caractérisé en ce que la plaquette d'entraînement (20) est logée dans un bloc support (6,7) et se déplace le long d'une partie filetée (10) de la tige de commande (8).

5. Système selon la revendication 4, caractérisé en ce que dans le bloc support est montée une butée (26) de limitation de déplacement de la plaquette d'entraînement.

6. Système selon l'une des revendications 2 à 4, caractérisé en ce que les extrémités opposées de la tige de commande sont filetées à pas inverses.

7. Système selon l'une des revendications 2 à 6, caractérisé en ce que la tige de commande (8) se déplace librement dans les blocs support (6,7) de façon que lorsqu'un des deux verrous en regard est en appui sur une surface d'appui, seul l'autre verrou se déplace pendant la poursuite de déplacement de la tige de commande.

8. Système selon la revendication 1, caractérisé en ce qu'il comprend quatre verrous (13′,13˝,14′,14˝) associés par paires, chaque paire de verrous étant portée par un bloc support (6a, 7a), et en ce que ledit cadre d'appui (5) comprend quatre surfaces d'appui (17′,17˝,18′,18˝) ménagées chacune sensiblement à un coin (19) dudit cadre d'appui.

9. Système selon la revendication 8, caractérisé en ce qu'il comprend des blocs support d'extrémité (6,7) à une seule tige de commande et des blocs support intermédiaires (6a,7a) à deux tiges de commande (8′,8˝) qui sont disposées l'une au-dessus de l'autre dans un même plan vertical.

10. Système selon la revendication 9, caractérisé en ce dans les blocs support intermédiaires (6a,7a), les plaquettes d'entraînement (20′,20˝ ou 21′,21˝) sont disposées symétriquement par rapport audit plan vertical, de façon que les verrous (14′,14˝ ou 13′,13˝) soient situés dans un même plan horizontal.

11. Système selon l'une des revendications 1 à 4, caractérisé en ce que les verrous comprennent chacun une extrémité d'appui biseautée (15,16) suivant un angle d'environ 15°.

12. Système selon l'une quelconque des revendications 1 ou 2, caractérisé en ce que les surfaces d'appui (17,17′,18′,18˝) sont biseautées suivant un angle d'environ 15°.

13. Système selon la revendication 1, caractérisé en ce que les moyens de verrouillage sont constitués par une plaquette de blocage (31).

14. Système selon la revendication 13, caractérisé en ce que la paroi arrière du bloc support comporte une lumière (39) pour le passage d'un écrou de blocage (34).

15. Système selon les revendications 13 ou 14, caractérisé en ce que la plaquette de blocage (31) est solidaire d'un doigt extérieur (22) du verrou.

16. Système selon l'une des revendications 13 à 15, caractérisé en ce que la plaquette de blocage (31) est montée sur la tige de commande et verrouille cette dernière en rotation.

17. Système selon l'une des revendications 13 à 16, caractérisé en ce que la plaquette de blocage (31) est montée sur une paroi de fermeture prévue sur le bloc support.

18. Système selon la revendication 1, caractérisé en ce que le cadre d'appui est constitué par le cadre inférieur d'un conteneur de munition.

## Patentansprüche

1. System zum Festklemmen einer Munition in einer Zelle eines senkrechten Abschußmoduls, mit Vorrichtungen zur Verschiebung von einander gegenüberliegenden Riegeln und Vorrichtungen zum Festklemmen dieser Riegel, dadurch gekennzeichnet, daß die Verschiebungsvorrichtungen zum Festklemmen (8, 8′, 8˝) mindestens zwei Riegel (13, 14) in einen unteren Stützrahmen (5) schieben, der zur Zentrierung der Munition durch Abstützen auf daran angebrachten Abstützflächen (17, 18) dient.

2. System gemäß dem Anspruch 1, dadurch gekennzeichnet, daß die Verschiebungsvorrichtungen der Riegel aus zumindest einem mit einem Anzugsglied (29) versehenen Spannbolzen (8) bestehen, der mit zwei gegenüberliegenden Riegeln (13, 14) verbunden ist, die jeweils auf einer Klemmvorrichtung (6, 7) angebracht sind.

3. System gemäß dem Anspruch 2, dadurch gekennzeichnet, daß der Spannbolzen mit zumindest einem der beiden Riegel über eine Mitnahmeplatte (20) verbunden ist.

4. System gemäß dem Anspruch 3, dadurch gekennzeichnet, daß die Mitnahmeplatte (20) sich in einer Klemmvorrichtung (6, 7) befindet und sich längs eines Gewindeteils (10) des Spannbolzens (8) bewegt.

5. System gemäß dem Anspruch 4, dadurch gekennzeichnet, daß die Klemmvorrichtung einen Anschlag (26) zur Verschiebungsbegrenzung der Mitnahmeplatte besitzt.

6. System gemäß einem der Ansprüche 2 bis 4, dadurch gekennzeichnet, daß die gegenüberliegenden Enden des Spannbolzens ein gegenläufiges Gewinde aufweisen.

7. System gemäß einem der Ansprüche 2 bis 6, dadurch gekennzeichnet, daß sich der Spannbolzen (8) in den Klemmvorrichtungen (6, 7) frei bewegt, so daß sich, wenn einer der beiden gegenüberliegenden Riegel auf einer Abstützfläche aufliegt, nur der andere Riegel während der weiteren Bewegung des Spannbolzens verschieben kann.

8. System gemäß dem Anspruch 1, dadurch gekennzeichnet, daß es aus vier paarweise angeordneten Riegeln (13′, 13˝, 14′, 14˝) besteht, wobei sich jedes Riegelpaar in einer Klemmvorrichtung (6a, 7a) befindet, und daß der besagte Stützrahmen (5) vier Stützflächen (17′, 17˝, 18′, 18˝) aufweist, die sich jeweils in einer Ecke (19) des besagten Stützrahmens befinden.

9. System gemäß dem Anspruch 8, dadurch gekennzeichnet, daß es an den Enden Klemmvorrichtungen (6, 7) mit einem einzigen Spannbolzen und dazwischen liegende, mittlere Klemmvorrichtungen (6a, 7a) mit zwei Spannbolzen (8′, 8˝) besitzt, die auf der gleichen Ebene senkrecht übereinander angeordnet sind.

10. System gemäß dem Anspruch 9, dadurch gekennzeichnet, daß die mittleren Klemmvorrichtungen (6a, 7a) sowie die Mitnahmeplatten (20′, 20˝ oder 21′, 21˝) symmetrisch zu der besagten senkrechten Ebene angeordnet sind, so daß sich die Riegen (14′, 14˝ oder 13′, 13˝) waagerecht auf der gleichen Ebene befinden.

11. System gemäß einem der Ansprüche 1 bis 4, dadurch gekennzeichnet, daß jeder Riegel an seinem Ende eine in einem Winkel von ca. 15° abgeschrägte Abstützfläche (15, 16) aufweist.

12. System gemäß einem der Ansprüche 1 oder 2, dadurch gekennzeichnet, daß die Abstützflächen (17, 17′, 18′, 18˝) in einem Winkel von ca. 15° abgeschrägt sind.

13. System gemäß dem Anspruch 1, dadurch gekennzeichnet, daß die Verriegelungsvorrichtung aus einer Feststellplatte (31) besteht.

14. System gemäß dem Anspruch 13, dadurch gekennzeichnet, daß die Rückseite der Klemmvorrichtung eine Aussparung (39) für eine Sicherungsmutter (34) aufweist.

15. System gemäß den Ansprüchen 13 oder 14, dadurch gekennzeichnet, daß die Feststellplatte (31) mit einem externen Stift (22) des Riegels fest verbunden ist.

16. System gemäß einem der Ansprüche 13 bis 15, dadurch gekennzeichnet, daß die Feststellplatte (31) auf den Spannbolzen montiert ist und ihn durch Drehen festklemmt.

17. System gemäß einem der Ansprüche 13 bis 16, dadurch gekennzeichnet, daß die Feststellplatte (31) auf eine auf der Klemmvorrichtung angebrachten Abschlußwand montiert ist.

18. System gemäß dem Anspruch 1, dadurch gekennzeichnet, daß der Stützrahmen vom unteren Rahmen eines Munitionsbehälters gebildet wird.

## Claims

1. System for locking a piece of ammunition inside a cell of a vertical launch module, comprising means for displacing the bolts arranged opposite one another and means to lock the bolts, characterized in that the means (8, 8′, 8˝) of displacement of at least two bolts (13, 14) bring these into a position that locks a bottom support frame (5) that acts as a centring device for the piece of ammunition by means of their resting on support surfaces (17, 18) made in these.

2. System according to claim 1, characterized in that the displacement means for the bolts comprise at least one control rod (8) fitted with an actuating head (29), and which is connected to two opposing bolts (13, 14) each borne by a support block (6, 7).

3. System according to claim 2, characterized in that the control rod is connected to at least one of the bolts by a drive plate (20).

4. System according to claim 3, characterized in that the drive plate (20) is housed inside a support block (6, 7) and moves along the threaded part (10) of the control rod (8).

5. System according to claim 4, characterized in that a limit stop (26) is mounted inside the support block to restrain the displacement of the drive plate.

6. System according to one of claims 2 to 4, characterized in that the opposite ends of the control rod have reverse pitch thread.

7. System according to one of claims 2 to 6, characterized in that the control rod (8) freely moves inside the support blocks (6, 7) so that when one of the two opposing bolts is resting on a support surface, the other bolt moves by itself while the control rod continues to move.

8. System according to claim 1, characterized in that it comprises four bolts (13, 13˝, 14′, 14˝) combined in pairs, with each pair of bolts being borne by a support block (6a, 7a) and in that the said support frame (5) comprises four support surfaces (17′, 17", 18′, 18") each created approximately at a corner (19) of the said support frame.

9. System according to claim 8, characterized in that it comprises end support blocks (6, 7) with a single control rod and intermediate support blocks (6a, 7a) with two control rods (8′, 8˝) which are arranged one above the other in the same vertical plane.

10. System according to claim 9, characterized in that inside the intermediate support blocks (6a, 7a), drive plates (20′, 20˝ or 21′, 21˝) are arranged symmetrically in relation to the said vertical plane, so that the bolts (14, 14˝ or 13′, 13˝) are situated in the same horizontal plane.

11. System according to one of claims 1 to 4, characterized in that the bolts each comprise a bearing end (15, 16) bevelled at an angle of approximately 15°.

12. System according to either of claims 1 or 2, characterized in that the support surfaces (17, 17′, 18′, 18˝) are bevelled at an angle of approximately 15°.

13. System according to claim 1, characterized in that the locking means comprise an immobilization plate (31).

14. System according to claim 13, characterized in that the rear wall of the support block comprises an opening (39) for a locknut (34) to pass through.

15. System according to claims 13 or 14, characterized in that the immobilization plate (31) is rigid with an external pin (22) of the bolt.

16. System according to claims 13 to 15, characterized in that the immobilization plate (31) is mounted on the control rod and locks this in rotation.

17. System according to claims 13 to 16, characterized in that the immobilization plate (31) is mounted on an enclosing wall provided on the support block.

18. System according to claim 1, characterized in that the support frame is made up of the bottom frame of a container for a piece of ammunition.
